# EUROPÄISCHE PATENTSCHRIFT

(11) **EP 0 470 353 B1**
(45) Veröffentlichungstag und Bekanntmachung des Hinweises auf die Patenterteilung: **16.03.1994**
(21) Anmeldenummer: 91110518.7
(22) Anmeldetag: 26.06.1991
(51) Int. Cl.: C01B 25/40

(54) **Verfahren und Anlage zur Herstellung von Ammoniumpolyphosphat**
Process and installation for the preparation of ammonium polyphosphate
Procédé et installation pour la préparation de polyphosphate d'ammonium

(30) Priorität: 31.07.1990 DE 4024240
(43) Veröffentlichungstag der Anmeldung: 12.02.1992
(73) Patentinhaber: HOECHST AKTIENGESELLSCHAFT, 65926 Frankfurt am Main (DE)
(72) Erfinder: Staffel, Thomas, Dr., W-5030 Hürth (DE); Adrian, Renate, W-5030 Hürth (DE); Becker, Wolfgang, W-5042 Erftstadt (DE)

(56) Entgegenhaltungen:
- EP-A- 0 088 265
- DE-B- 2 330 174

## Beschreibung

Die vorliegende Erfindung betrifft ein Verfahren zur Herstellung von im wesentlichen wasserunlöslichem, kettenförmigem Ammoniumpolyphosphat aus äquimolaren Mengen von Ammoniumorthophosphat und Phosphorpentoxid in Gegenwart von Ammoniak bei Temperaturen von 170 bis 350°C unter ständigem Mischen, Kneten und Zerkleinern sowie eine Anlage zu seiner Durchführung.

Bei der Herstellung von Ammoniumpolyphosphat durch Umsetzung von Phosphorpentoxid und Diammoniumphosphat mit Ammoniakgas, beispielsweise nach dem Verfahren gemäß der US-A-3 978 195, ist es erforderlich, nicht nur in der Reaktionsphase sondern auch während der Temperphase im Reaktor die Ammoniakatmosphäre aufrechtzuerhalten, da sonst thermische Zersetzung des Ammoniumpolyphosphates einsetzt. Während der Temperphase wird im Reaktor durch die fortschreitende Kondensation der Phosphatgruppen Wasserdampf freigesetzt, der zur Erzielung eines Ammoniumpolyphosphates hoher Qualität entfernt werden muß. Daher ist es von Wichtigkeit, auch während der Temperphase eine größere Menge Ammoniak als Transportgas für den Wasserdampf durch den Reaktor hindurchzuleiten, obwohl der Ammoniak-Verbrauch in dieser Phase geringer ist als in der Reaktionsphase. Das Abblasen des Wasserdampf und Ammoniak enthaltenden Abgases aus dem Reaktor in die Atmosphäre verbietet sich aus Gründen des Umweltschutzes. Will man das im Abgas enthaltende Ammoniak einer Verwendung zuführen, so muß das Abgas mit Hilfe einer Mineralsäure neutralisiert werden. Setzt man als Mineralsäure Polyphosphorsäure ein, so liegt nach dem Durchleiten der Wasserdampf und Ammoniak enthaltenden Abgase durch diese eine teilammonisierte Polyphosphorsäure vor.

Es ist Aufgabe der vorliegenden Erfindung, eine mögliche Verwendung für teilammonisierte Polyphosphorsäure anzugeben. Dies ist beim Verfahren zur Herstellung von im wesentlichen wasserunlöslichem Ammoniumpolyphosphat aus Diammoniumphosphat und Phosphorpentoxid in Gegenwart von Ammoniak erfindungsgemäß dadurch möglich, daß man Diammoniumphosphat und Phosphorpentoxid mindestens teilweise durch teilammonisierte Polyphosphorsäure ersetzt.

Das Verfahren gemäß der Erfindung kann weiterhin wahlweise auch noch dadurch ausgestaltet sein, daß
a) man bis zu 15 Gewichts% des Diammoniumphosphates und des Phosphorpentoxides durch teilammonisierte Polyphosphorsäure ersetzt;
b) die teilammonisierte Polyphosphorsäure durch Inkontaktbringen von Polyphosphorsäure mit Wasserdampf und Ammoniak enthaltenden Gasen erhalten wird;
c) die Wasserdampf und Ammoniak enthaltenden Gase Abgase aus der Herstellung von im wesentlichen wasserunlöslichem Ammoniumpolyphosphat durch Umsetzung von Diammoniumphosphat und Phosphorpentoxid in Gegenwart von Ammoniak sind;
d) die Polyphosphorsäure mit einer Temperatur zwischen 120 und 170°C mit den Wasserdampf und Ammoniak enthaltenden Gasen in Kontakt gebracht wird;
e) die Wasserdampf und Ammoniak enthaltenden Gase mit konzentrierter Polyphosphorsäure in Kontakt gebracht werden;
f) die Polyphosphorsäure einen P₂O₅-Gehalt von 70 bis 88 Gewichts%, vorzugsweise von 76 bis 84 Gewichts%, aufweist.

Eine Anlage zur Durchführung des erfindungsgemäßen Verfahrens, die aus einem geschlossenen Reaktor besteht, welcher mit Dosiereinrichtungen und Zuführungsrohren für Phosphorpentoxid und Diammoniumphosphat, einem Ammoniak-Zuführungsrohr, einem Ammoniumpolyphosphat-Austragsrohr sowie mit einer Leitung für Abgas versehen ist und in dessen Innenraum drehbare Misch-, Knet- und Zerkleinerungswerkzeuge angebracht sind, kann dadurch gekennzeichnet sein, daß ein über eine Zuführungsleitung mit Polyphosphorsäure beaufschlagbarer, beheizbarer Rührwerksbehälter vorgesehen ist, mit dessen Hilfe aus dem über die Leitung vom Reaktor zuströmenden Abgas Wasserdampf und Ammoniak entfernbar sind und aus dem teilammonisierte Polyphosphorsäure über eine Ablaufleitung in den Reaktor einführbar ist.

Die Anlage zur Durchführung des erfindungsgemäßen Verfahrens kann auch noch dadurch weitergebildet sein, daß
g) auf den Rührwerksbehälter eine Kolonne aufgesetzt ist, deren Kopf über eine Leitung, eine Pumpe und eine Leitung mit teilammonisierter Polyphosphorsäure beaufschlagbar ist, während der Fuß der Kolonne mit der Leitung strömungsmäßig verbunden ist;
h) die Leitung in einem im Rührwerksbehälter angeordneten Einsteckrohr endet, während der Rührwerksbehälter mit einem Stutzen versehen ist, welcher über eine Leitung, eine Pumpe und eine Leitung mit teilammonisierter Polyphosphorsäure beaufschlagbar ist.

Das nach dem Verfahren gemäß der Erfindung hergestellte Ammoniumpolyphosphat weist die gleichen Eigenschaften auf wie ausschließlich aus Phosphorpentoxid und Diammoniumphosphat erhaltene Ammoniumpolyphosphate.

In der beigefügten Zeichnung sind Anlagen zur Durchführung des erfindungsgemäßen Verfahrens schematisch und teilweise im Schnitt dargestellt. Dabei zeigen:
- Fig. 1: eine Anlage mit Kolonnenabsorption des Ammoniaks
- Fig. 2: eine Anlage mit Behälterabsorption des Ammoniaks

Oberhalb eines Reaktors 1 sind eine erste Dosiereinrichtung 2 für Phosphorpentoxid und eine zweite Dosiereinrichtung 3 für Diammoniumphosphat angeordnet. In die Dosiereinrichtungen (2, 3) münden Zuführungsrohre (4, 5) ein und von ihnen gehen in den Reaktor 1 führende Rohre (6, 7) ab. In den Reaktor 1 mündet weiterhin ein Ammoniak-Zuführungsrohr 8 ein, während vom Boden des Reaktors 1 ein Ammoniumpolyphosphat-Austragsrohr 9 abgeht. Der Reaktor 1 ist weiterhin mit einem Heißölerzeuger 10 strömungsmäßig verbunden. In einen doppelwandigen Rührwerksbehälter 11, welcher über ein Dampfzuführungsrohr 12 beheizbar ist, mündet eine Zuführungsleitung 13 für Polyphosphorsäure ein, während vom Boden des Rührwerksbehälter 11 eine zu einer Pumpe 14 führende Leitung 15 abgeht. In der Leitung 15 befindet sich ein Dreiwegeventil 16, durch welches der Reaktor 1 über eine Ablaufleitung 17 mit teilammonisierter Polyphosphorsäure beaufschlagbar ist.

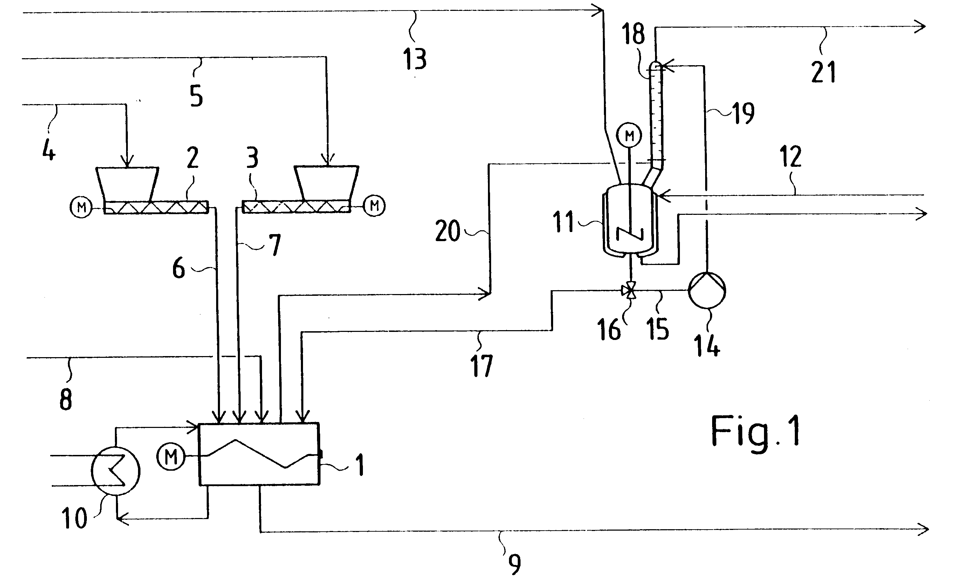

Gemäß Figur 1 ist auf den Rührwerksbehälter 11 eine Kolonne 18 aufgesetzt, deren Kopf über eine mit der Pumpe 14 verbundene Leitung 19 mit teilammonisierter Polyphosphorsäure beaufschlagbar ist, während der Fuß der Kolonne 18 mit dem Reaktor 1 über eine Leitung 20 zur Zuführung von Ammoniak und Wasserdampf enthaltendem Abgas verbunden ist. Vom Kopf der Kolonne 18 geht weiterhin eine Abgasleitung 21 ab.

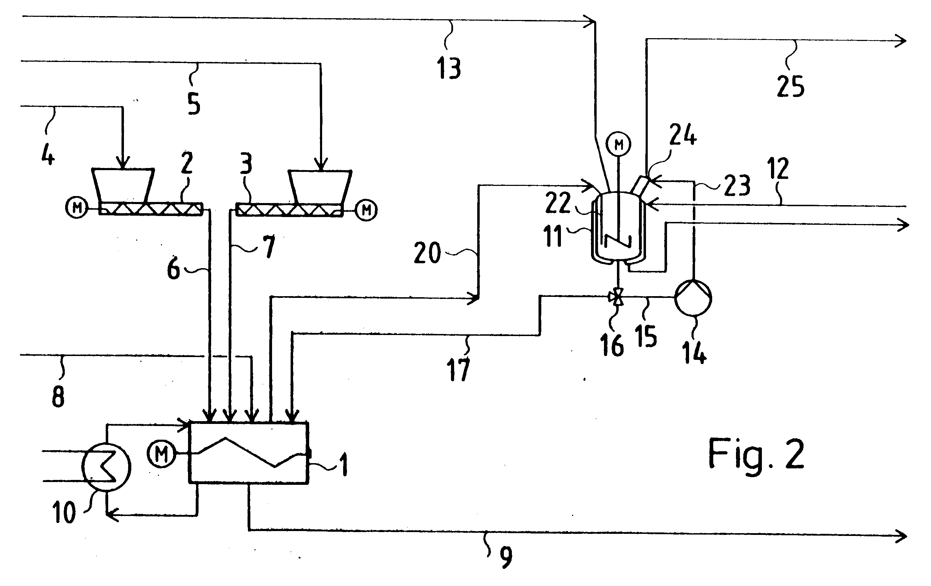

Gemäß Figur 2 endet die Leitung 20 für Ammoniak und Wasserdampf enthaltendes Abgas in einem im Rührwerksbehälter 11 angeordneten Einsteckrohr 22. Von der Pumpe 14 führt eine Leitung 23 in einen Stutzen 24 am Rührwerksbehälter 11. Vom Stutzen 24 geht weiterhin eine Abgasleitung 25 ab.

### Beispiel 1

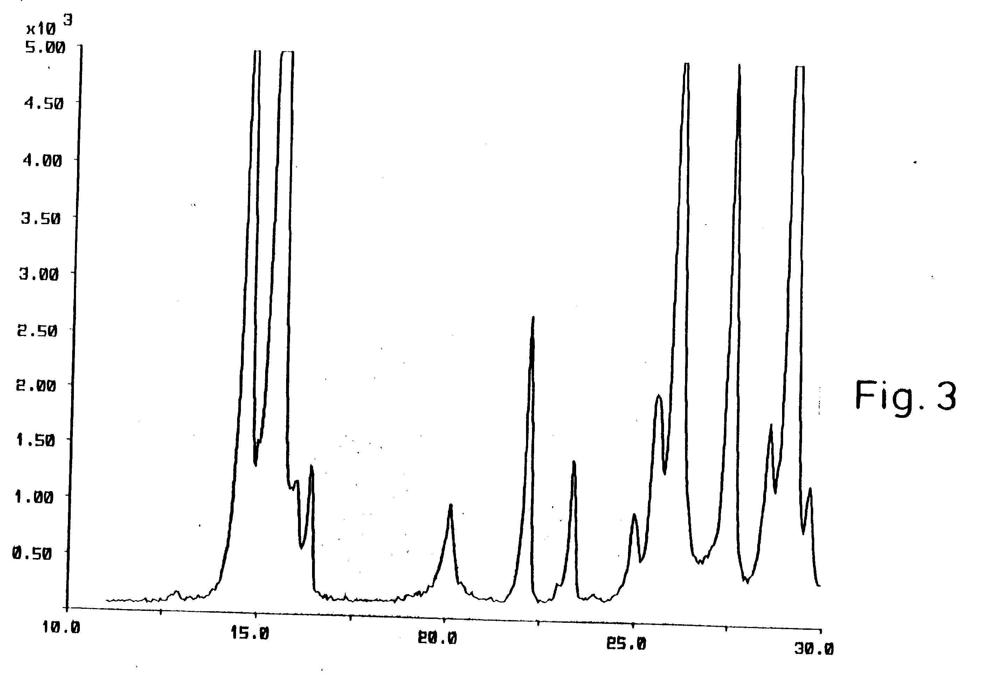

Ein Gemisch aus 2,84 kg Phosphorpentoxid und 2,64 kg Diammoniumphosphat wurde in einem Reaktor (Doppelwellen-Z-Kneter mit 10 l Rauminhalt) bei 200°C aufgeschmolzen. Unter Einleitung von Ammoniak wurde die Schmelze auf 280°C erhitzt und 30 Minuten bei dieser Temperatur gehalten. Dann wurden 1,4 kg 170°C heiße, teilammonisierte Polyphosphorsäure (84 Gewichts% P₂O₅) zugegeben. Nach einer Gesamtreaktionszeit von 4 Stunden resultierte ein Ammoniumpolyphosphat mit folgenden Eigenschaften:
- pH-Wert: 6,8
- Säurezahl: 0,2 mg KOH/g
- Viskosität: 32 mPa . s
- löslicher Anteil: 7,2 %
- Kettenlänge: > 1000
- Modifikation: II (gemäß Röntgendiagramm; vergl. Fig. 3)

### Beispiel 2

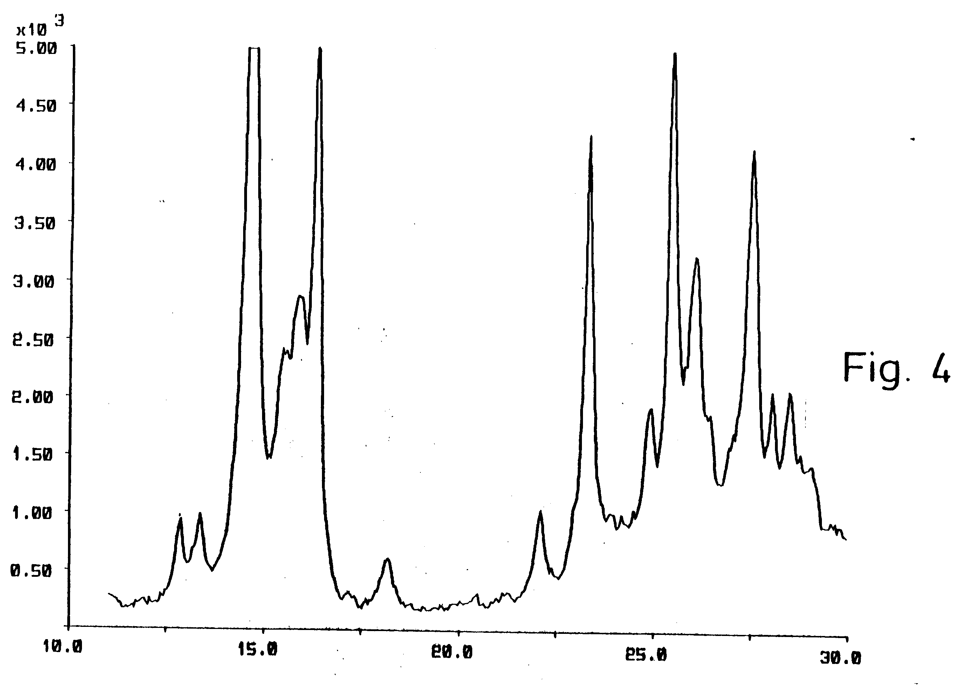

In einem auf 150°C vorgeheizten Reaktor (Doppelwellen-Z-Kneter mit 10 l Rauminhalt) wurden 4,8 kg Ammoniumpolyphosphat der Modifikation I vorgelegt. Dann wurden 2,9 kg 160°C heiße, teilammonisierte Polyphosphorsäure (84 Gewichts% P₂O₅) eingetragen. Nach 3,5 stündiger Reaktion bei 280°C unter Ammoniakatmosphäre wurde ein pulverförmiges Ammoniumpolyphosphat mit folgenden Eigenschaften erhalten:
- pH-Wert: 6,6
- Säurezahl: 0,64 mg KOH/g
- Viskosität: 22 mPa . s
- löslicher Anteil: 6,0 %
- Kettenlänge: 45
- Modifikation: I (gemäß Röntgendiagramm; vergl. Fig. 4)

In den Figuren 3 und 4 sind auf der Ordinate die Intensitäten und auf der Abszisse die Beugungswinkel 2 ϑ aufgetragen.

## Patentansprüche

1. Verfahren zur Herstellung von im wesentlichen wasserunlöslichem, kettenförmigem Ammoniumpolyphosphat aus äquimolaren Mengen von Diammoniumphosphat und Phosphorpentoxid in Gegenwart von Ammoniak bei Temperaturen von 170 bis 350°C Unter ständigem Mischen, Kneten und Zerkleinern, dadurch gekennzeichnet, daß man Diammoniumphoshat und Phosphorpentoxid mindestens teilweise durch teilammonisierte Polyphosphorsäure ersetzt.

2. Verfahren nach Anspruch 1, dadurch gekennzeichnet, daß man bis zu 15 Gewichts% des Diammoniumphosphates und des Phosphorpentoxides durch teilammonisierte Polyphosphorsäure ersetzt.

3. Verfahren nach Anspruch 1 oder 2, dadurch gekennzeichnet, daß die teilammonisierte Polyphosphorsäure durch Inkontaktbringen von Polyphosphorsäure mit Wasserdampf und Ammoniak enthaltenden Gasen erhalten wird.

4. Verfahren nach Anspruch 3, dadurch gekennzeichnet, daß die Wasserdampf und Ammoniak enthaltenden Gase Abgase aus der Herstellung von im wesentlichen wasserunlöslichem Ammoniumpolyphosphat durch Umsetzung von Diammoniumphosphat und Phosphorpentoxid in Gegenwart von Ammoniak sind.

5. Verfahren nach Anspruch 3, dadurch gekennzeichnet, daß die Polyphosphorsäure mit einer Temperatur zwischen 120 und 170°C mit den Wasserdampf und Ammoniak enthaltenden Gasen in Kontakt gebracht wird.

6. Verfahren nach Anspruch 3, dadurch gekennzeichnet, daß die Wasserdampf und Ammoniak enthaltenden Gase mit konzentrierter Polyphosphorsäure in Kontakt gebracht werden.

7. Verfahren nach Anspruch 6, dadurch gekennzeichnet, daß die Polyphosphorsäure einen P₂O₅-Gehalt von 70 bis 88 Gewichts%, vorzugsweise von 76 bis 84 Gewichts%, aufweist.

8. Anlage zur Durchführung des Verfahrens nach mindestens einem der Ansprüche 1 bis 7, bestehend aus einem geschlossenen Reaktor, welcher mit Dosiereinrichtungen und Zuführungsrohren für Phosphorpentoxid und Diammoniumorthophosphat, einem Ammoniak-Zuführungsrohr, einem Ammoniumpolyphosphat-Austragsrohr sowie mit einer Leitung für Abgas versehen ist und in dessen Innenraum drehbare Misch-, Knet- und Zerkleinerungswerkszeuge angebracht sind, dadurch gekennzeichnet, daß ein über eine Zuführungsleitung (13) mit Polyphosphorsäure beaufschlagbarer, beheizbarer Rührwerksbehälter (11) vorgesehen ist, mit dessen Hilfe aus dem über die Leitung (20) vom Reaktor (1) zuströmenden Abgas Wasserdampf und Ammoniak entfernbar sind und aus dem teilammonisierte Polyphosphorsäure über eine Ablaufleitung (17) in den Reaktor (1) einführbar ist.

9. Anlage nach Anspruch 8, dadurch gekennzeichnet, daß auf den Rührwerksbehälter (11) eine Kolonne (18) aufgesetzt ist, deren Kopf über eine Leitung (15), eine Pumpe (14) und eine Leitung (19) mit teilammonisierter Polyphosphorsäure beaufschlagbar ist, während der Fuß der Kolonne (18) mit der Leitung (20) strömungsmäßig verbunden ist.

10. Anlage nach Anspruch 8, dadurch gekennzeichnet, daß die Leitung (20) in einem im Rührwerksbehälter (11) angeordneten Einsteckrohr (22) endet, während der Rührwerksbehälter (11) mit einem Stutzen (24) versehen ist, welcher über eine Leitung (15), eine Pumpe (14) und eine Leitung (23) mit teilammonisierter Polyphosphorsäure beaufschlagbar ist.

## Claims

1. A process for the preparation of essentially water-insoluble, chain-form ammonium polyphosphate from equimolar amounts of diammonium phosphate and phosphorus pentoxide in the presence of ammonia at temperatures of from 170 to 350°C with constant mixing, kneading and comminution, which comprises replacing at least some of the diammonium phosphate and phosphorus pentoxide by partially ammoniated polyphosphoric acid.

2. The process as claimed in claim 1, wherein up to 15 % by weight of the diammonium phosphate and of the phosphorus pentoxide are replaced by partially ammoniated polyphosphoric acid.

3. The process as claimed in claim 1 or 2, wherein the partially ammoniated polyphosphoric acid is obtained by bringing polyphosphoric acid into contact with water vapor- and ammonia-containing gases.

4. The process as claimed in claim 3, wherein the water vapor- and ammonia-containing gases are offgases from the preparation of essentially water-insoluble ammonium polyphosphate by reacting diammonium phosphate and phosphorus pentoxide in the presence of ammonia.

5. The process as claimed in claim 3, wherein the polyphosphoric acid is brought into contact with the water vapor- and ammonia-containing gases at a temperature between 120 and 170°C.

6. The process as claimed in claim 3, wherein the water vapor- and ammonia-containing gases are brought into contact with concentrated polyphosphoric acid.

7. The process as claimed in claim 6, wherein the polyphosphoric acid has a P₂O₅ content of from 70 to 88 % by weight, preferably from 76 to 84 % by weight.

8. A plant for carrying out the process as claimed in at least one of claims 1 to 7, which comprises a sealed reactor which is provided with metering devices and feed tubes for phosphorus pentoxide and diammonium orthophosphate, an ammonia feed tube, an ammonium polyphosphate discharge tube and a line for offgas, and inside which rotatable mixing, kneading and comminution elements are provided, wherein a heatable stirred tank (11) is provided which can be charged with polyphosphoric acid via a feed line (13) and using which water vapor and ammonia can be removed from the offgas flowing from the reactor (1) via the line (20) and from which partially ammoniated polyphosphoric acid can be introduced into the reactor (1) via an outlet line (17).

9. A plant as claimed in claim 8, wherein a column (18) is mounted on the stirred tank (11) and can be charged at the top with partially ammoniated polyphosphoric acid via a line (15), a pump (14) and a line (19), while the foot of the column (18) is connected flow-wise to the line (20).

10. A plant as claimed in claim 8, wherein the line (20) terminates in an immersion tube (22) arranged in the stirred tank (11), while the stirred tank (11) is provided with a connector (24) which can be charged with partially ammoniated polyphosphoric acid via a line (15), a pump (14) and a line (23).

## Revendications

1. Procédé de préparation de polyphosphate d'ammonium linéaire essentiellement insoluble dans l'eau à partir de quantités équimolaires de phosphate diammonique et de pentoxyde de phosphore en présence d'ammoniac à des températures de 170 à 350°C sous agitation, malaxage et broyage constants, caractérisé en ce qu'on remplace au moins en partie le phosphate de diammonium et le pentoxyde de phosphore par de l'acide polyphosphorique partiellement ammoniaqué.

2. Procédé selon la revendication 1, caractérisé en ce qu'on remplace jusqu'à 15 % en poids du phosphate diammonique et du pentoxyde de phosphore par de l'acide polyphosphorique partiellement ammoniaqué.

3. Procédé selon la revendication 1 ou 2, caractérisé en ce que l'acide polyphosphorique partiellement ammoniaqué est obtenu par mise en contact d'acide polyphosphorique avec des gaz contenant de la vapeur d'eau et de l'ammoniac.

4. Procédé selon la revendication 3, caractérisé en ce que les gaz contenant la vapeur d'eau et l'ammoniac sont des gaz résiduaires de la fabrication de polyphosphate d'ammonium essentiellement insoluble dans l'eau par réaction de phosphate diammonique et de pentoxyde de phosphore en présence d'ammoniac.

5. Procédé selon la revendication 3, caractérisé en ce que l'acide polyphosphorique est mis en contact avec les gaz contenant de la vapeur d'eau et de l'ammoniac à une température comprise entre 120 et 170°C.

6. Procédé selon la revendication 3, caractérisé en ce que les gaz contenant de la vapeur et d'eau et de l'ammoniac sont mis en contact avec de l'acide polyphosphorique concentré.

7. Procédé selon la revendication 6, caractérisé en ce que l'acide polyphosphorique a une teneur en P₂O₅ comprise entre 70 et 88 %, de préférence 76 et 84 %.

8. Dispositif pour la mise en oeuvre du procédé selon au moins l'une des revendications 1 à 7, constitué d'un réacteur fermé, lequel est muni de dispositifs de dosage et de tuyaux d'alimentation pour le pentoxyde de phosphore et l'orthophosphate diammonique, d'un tuyau d'alimentation pour l'ammoniac, d'un tuyau d'évacuation de polyphosphate d'ammonium ainsi que d'une conduite pour les gaz résiduaires et dans la chambre intérieure duquel sont adaptés des outils amovibles de mélange, de malaxage et de broyage, caractérisé en qu'il est prévu un réservoir mélangeur (11) chauffable, alimentable en acide polyphosphorique par une conduite d'introduction (13), au moyen duquel la vapeur d'eau et l'ammoniac provenant du réacteur (1) sont séparables des gaz résiduaires affluant par la conduite (20) et à partir duquel l'acide polyphosphorique partiellement ammoniaqué peut être introduit par une tubulure d'écoulement (17) dans le réacteur (1).

9. Installation selon la revendication 8, caractérisée en ce que, sur le réservoir mélangeur (11), est disposée une colonne (18) dont la tête est alimentable en acide polyphosphorique partiellement ammoniaqué par une conduite (15), une pompe (14) et une conduite (19), alors que le pied de la colonne (18) est relié hydrauliquement à la conduite (20).

10. Installation selon la revendication 8, caractérisée en ce que la conduite (20) aboutit dans un tube insérable (22) adaptée dans le réservoir mélangeur (11), alors que le réservoir mélangeur (11) est muni d'un manchon (24), lequel peut être alimenté en acide polyphosphorique partiellement ammoniaqué au moyen d'une conduite (15), d'une pompe (14) et d'une conduite (23).
